(19) Europäisches Patentamt
European Patent Office
Office européen des brevets

(11) EP 2 157 857 B1

(12) **EUROPEAN PATENT SPECIFICATION**

(45) Date of publication and mention of the grant of the patent:
**18.09.2013 Bulletin 2013/38**

(21) Application number: **08760923.6**

(22) Date of filing: **12.06.2008**

(51) Int Cl.:
***A01N 43/08*** *(2006.01)* ***A01N 43/12*** *(2006.01)*
***A01P 7/04*** *(2006.01)*

(86) International application number:
**PCT/EP2008/057382**

(87) International publication number:
**WO 2008/152091 (18.12.2008 Gazette 2008/51)**

(54) **PESTICIDAL COMPOSITION COMPRISING A STRIGOLACTONE DERIVATIVE AND AN INSECTICIDE COMPOUND**

PESTIZIDZUSAMMENSETZUNG MIT EINEM STRIGOLACTONDERIVAT UND EINER INSEKTIZIDVERBINDUNG

COMPOSITION PESTICIDE COMPRENANT UN DERIVE DE STRIGOLACTONE ET UN COMPOSE INSECTICIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.06.2007 EP 07356083**

(43) Date of publication of application:
**03.03.2010 Bulletin 2010/09**

(73) Proprietor: **Bayer Intellectual Property GmbH**
**40789 Monheim (DE)**

(72) Inventors:
- **HUNGENBERG, Heike**
**40764 Langenfeld (DE)**
- **THIELERT, Wolfgang**
**51519 Odenthal (DE)**
- **VORS, Jean-Pierre**
**69110 Sainte Foy Les Lyon (FR)**

(74) Representative: **Guitton, Carole et al**
**Bayer S.A.S.**
**Patents & Licensing Department**
**14 Impasse Pierre Baizet**
**CS 99163**
**69263 Lyon Cedex 09 (FR)**

(56) References cited:
**WO-A-2005/077177**

- **JUAN C.G. GALINDO ET AL.: "SAR studies of sesquiterpene lactones as Orobanche cumana seed germination stimulants" JOURNAL OF AGRICULTURAL AND FOOD CHEMISTRY, vol. 50, 2002, pages 1911-1917, XP007903570**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 157 857 B1

Printed by Jouve, 75001 PARIS (FR)

## Description

The present invention relates to pesticidal compositions comprising a strigolactone derivative and an insecticide compound. The present invention also relates to a method of combating or controlling pests and diseases or to improve yield, growth or vigor of a plant by applying at a locus such a composition.

Strigolactones have been identified in the root exudates of a variety of plant species, and have been initially disclosed as compounds capable of stimulating the seed germination of parasitic weed species, especially *Orobanche sp.* and *striga sp.* Several strigolactones have been identified, including strigol, sorgolactone, alectrol, orobanchol (Cook et al., 1972, J Am Chem Soc, 94, 6198-6199; Butler, 1995, Allelopathy: organism, processes and application, 158-168; Hauck et al., 1992, J Plant Physiol, 139, 474-478; Muller et al., 1992, J Plant Growth Regul, 11, 77-84, Siame et al., 1993, J Agr Food Chem, 41, 1486- 1491, Yokota et al., 1998, Phytochemistry, 49, 1967-1973).

More recently, It has been shown that strigolactones can stimulate the growth of arbuscular mycorrhizae (AM) fungi (WO 2005/077177). AM fungi are obligate symbionts incapable of completing their life cycle in the absence of a host root. The fungi penetrate and colonize plant roots, where they differentiate into highly branched structures known as arbuscules. More than 80% of lands plants are forming symbiotic associations with AM fungi.

The chemical structures of these natural strigolactones are represented in formula 1. They generally possess 4 cycles A, B, C, D and share the common configuration indicated below, in which cycles A and B can comprises double bond(s) or substituents:

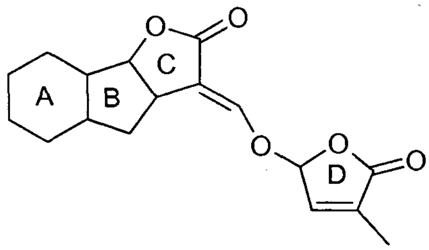

Additionally to these natural occurring compounds, a number of structural analogues have been designated, synthesized and biologically tested on the seed germination or as inducer of hyphal branching.
The connection of the C and D cycles to each other via an enol ether bond seems advantageous for germination stimulation. This C-D configuration is also advantageous for the effect of strigolactones on AM fungi, when modifications in the A and B cycles do not appear to affect their ability to induce hyphal branching in AM fungi (Akiyama K. and H. Hayashi H., 2006, Annals of Botany, 97: 925-931).

These synthetic compounds, which may be identical to natural strigolactones or derivatives from them, are usually easier to be prepared in large amount than natural compounds extracted from root exsudates. They can therefore overcome a major drawback of the availability of natural compounds and are more suitable for a large scale application.

It is always of high-interest in agriculture to use novel pesticidal mixtures showing a broader scope of activity, or a fungicide or insecticide synergistic effect or a synergistic improvement in the plant stand, growth, and yield properties of the plants.

The composition according to the present invention may provide a synergistic effect. This synergistic effect allows a reduction of the chemical substances spread into the environment and a reduction of the cost of the treatment.

In the context of the present invention, the term "synergistic effect" is defined by Colby according to the article entitled "Calculation of the synergistic and antagonistic responses of herbicide combinations" Weeds, (1967), 15, pages 20-22.

The latter article mentions the formula:

$$E = x + y - \frac{x * y}{100}$$

in which E represents the expected percentage of inhibition of the disease for the combination of the two compounds at defined doses (for example equal to x and y respectively), x is the percentage of inhibition observed for the disease by the compound (I) at a defined dose (equal to x), y is the percentage of inhibition observed for the disease by the compound (II) at a defined dose (equal to y). When the percentage of inhibition observed for the combination is greater than E, there is a synergistic effect.
Such calculation can be done with the percentage of enhancement of plant characteristics such as plant stand, growth, vigor or yield in comparison to non-treated soil, seeds, seedlings, roots or plants, wherein an enhancement refers to an

improvement (which may be statistically significant) in any of the above plant characteristics in comparison to non-treated soil, seeds, seedlings, roots or plants.

The pesticidal compositions according to the invention have demonstrated significant improvement in the combination over the individual treatments alone with respect to plant growth, vigor or yield of plants or crops, or insecticide effect.

Additionally, the use of the compositions according to the invention in pre- treatment may also show a significant improvement in term of pesticidal efficacy due to the potential action of the strigolactones as suicidal germination agents. When used in pre- treatment, the compositions according to the invention can induce germination of the parasitic weed species, when their obligatory host is not present. The parasitic weeds therefore would die because they fail to find a host attachment.

**Accordingly, the present invention provides a composition comprising:**

**a) a strigolactone derivative selected in the list L consisting of:**

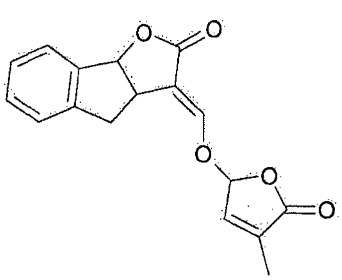

**(Ia)**

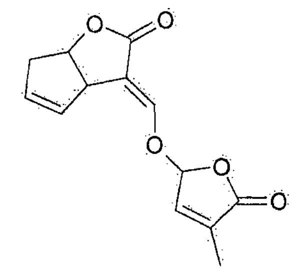

**(Ib)**

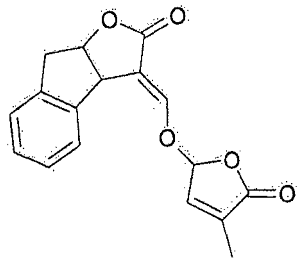

**(Id)**

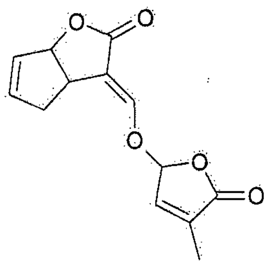

**(Ie)**

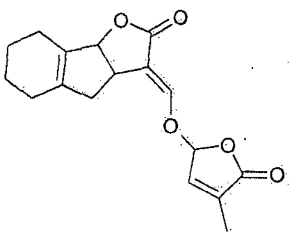

**(If)**

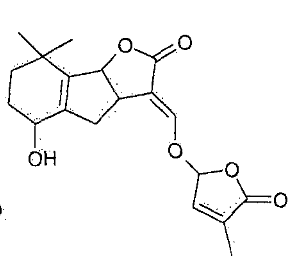

**(Ig)**

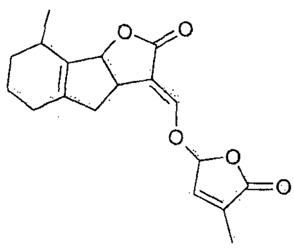

**(Ih)**

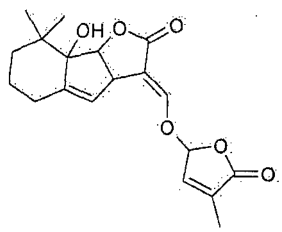

(Ij)

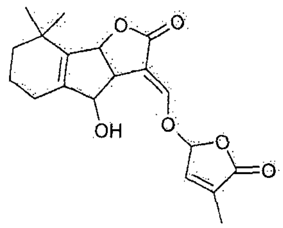

(Ik)

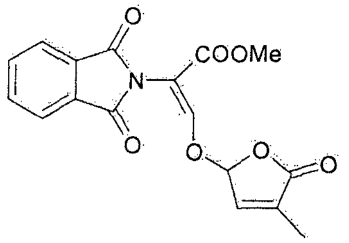

(Il)

**and**

**b) an insecticide compound selected in the list L1 consisting of abamectin, clothianidin, imidacloprid, chlorantraniliprole and thiodicarb;**

**in a (a)/(b) weight ratio of from 1/1 to $1/10^{13}$**

Any of the compounds according to the present invention may also exist in one or more geometric isomeric form depending on the number of double bond within the compound. The invention thus equally relates to any geometric isomer and to any possible mixtures thereof, in any proportion. Geometric isomers can be separated according to any method known per se by the man ordinary skilled in the art.

Any compound according to the invention **having** a hydroxy group, a sulphenyl group or an amino group can exist in a tautomeric form resulting from the shift of the proton of said hydroxy group, sulphenyl group or amino group respectively Such tautomeric forms are also part of the present invention. Generally, any tautomenc form of a compound according to the invention **having** a hydroxy group, a sulphenyl group or an amino group, as well as the tautomeric forms of the compounds which can optionally be used as intermediates in the preparation processes according to the invention are also part of the present invention

According to the invention, the following generic terms are generally used with the following meanings:

- halogen means fluorine, chlorine, bromine or iodine;
- heteroatom can be nitrogen, oxygen or sulphur;

unless indicated otherwise, a group or a substituent that is substituted according to the invention can be substituted by one or more of the following groups or atoms: a halogen atom, a nitro group, a hydroxy group, a cyano group, an amino group, a sulphenyl group, a formyl group, a formyloxy group, a formylamino group, a carbamoyl group, a N- hydroxycarbamoyl group, a carbamate group, substituted or non- substituted (hydroxyimino)- $C_1$- $C_6$- alkyl group, substituted or non- substituted $C_1$- $C_8$- alkyl, substituted or non- substituted tri ($C_1$- $C_8$- alkyl) silyl- $C_1$- $C_8$- alkyl, substituted or non-substituted $C_1$- $C_8$- cycloalkyl, substituted or non- substituted tri ($C_1$- $C_8$- alkyl) silyl- $C_1$- $C_8$- cycloalkyl, substituted or non- substituted $C_1$- $C_8$- halogenoalkyl having 1 to 5 halogen atoms, substituted or non- substituted $C_1$- $C_8$- halogenocycloalkyl having 1 to 5 halogen atoms a $C_2$- $C_8$- alkenyl, substituted or non- substituted $C_2$- $C_8$-alkynyl, substituted or non- substituted $C_1$- $C_8$- alkylamino, substituted or non- substituted di- $C_1$- $C_8$- alkylamino, substituted or non- substituted $C_1$- $C_8$- alkoxy, substituted or non- substituted $C_1$- $C_8$- halogenoalkoxy having 1 to 5 halogen atoms, substituted or non-substituted $C_2$- $C_8$- alkenyloxy, substituted or non- substituted $C_2$- $C_8$- alkynyloxy, substituted or non- substituted $C_1$- $C_8$- alkylsulphenyl, substituted or non- substituted $C_1$- $C_8$- halogenoalkylsulphenyl having 1 to 5 halogen atoms, substituted or non- substituted $C_2$- $C_8$- alkenyloxy, substituted or non- substituted $C_2$- $C_8$- halogenoalkenyloxy having 1 to 5 halogen atoms, substituted or non- substituted $C_3$- $C_8$- alkynyloxy, substituted or non- substituted $C_3$- $C_8$- halogenoalkynyloxy having 1 to 5 halogen atoms, substituted or non- substituted $C_1$- $C_8$- alkylcarbonyl, substituted or non- substituted $C_1$- $C_8$- halogenoalkylcarbonyl having 1 to 5 halogen atoms, substituted or non- substituted $C_1$- $C_8$- alkylcarbamoyl,

substituted or non- substituted di- $C_1$- $C_8$- alkylcarbamoyl, substituted or non- substituted N- C1- $C_8$- alkyloxycarbamoyl, substituted or non- substituted $C_1$- $C_8$- alkoxycarbamoyl, substituted or non- substituted N- $C_1$- $C_8$- alkyl- $C_1$- $C_8$- alkoxycarbamoyl, substituted or non- substituted $C_1$- $C_8$- alkoxycarbonyl, substituted or non- substituted $C_1$- $C_8$- halogenoalkoxycarbonyl having 1 to 5 halogen atoms, substituted or non- substituted $C_1$- $C_8$- alkylcarbonyloxy, substituted or non- substituted $C_1$- $C_8$- halogenoalkylcarbonyloxy having 1 to 5 halogen atoms, substituted or non- substituted $C_1$- $C_8$- alkylcarbonylamino, substituted or non- substituted $C_1$- $C_8$- halogenoalkylcarbonylamino having 1 to 5 halogen atoms, substituted or non- substituted $C_1$- $C_8$- alkylaminocarbonyloxy, substituted or non- substituted di- $C_1$- $C_8$- alkylaminocarbonyloxy, substituted or non- substituted $C_1$- $C_8$- alkyloxycarbonyloxy, substituted or non- substituted $C_1$- $C_8$- alkylsulphenyl, substituted or non- substituted $C_1$- $C_8$- halogenoalkylsulphenyl having 1 to 5 halogen atoms, substituted or non- substituted $C_1$- $C_8$- alkylsulphinyl, substituted or non- substituted $C_1$- $C_8$- halogenoalkylsulphinyl having 1 to 5 halogen atoms, substituted or non- substituted $C_1$- $C_8$- alkylsulphonyl, substituted or non- substituted $C_1$- $C_8$- halogenoalkylsulphonyl having 1 to 5 halogen atoms, substituted or non- substituted $C_1$- $C_8$- alkylaminosulfamoyl, substituted or non- substituted di- $C_1$- $C_8$- alkylaminosulfamoyl, substituted or non- substituted ($C_1$- $C_6$- alkoxyimino)- $C_1$- $C_6$- alkyl, substituted or non- substituted ($C_1$- $C_6$- alkenyloxyimino)- $C_1$- $C_6$- alkyl, substituted or non- substituted ($C_1$- $C_6$- alkynyloxyimino)- $C_1$- $C_6$- alkyl, substituted or non- substituted (benzyloxyimino)- $C_1$- $C_6$- alkyl, substituted or non- substituted $C_1$- $C_8$- alkoxyalkyl, substituted or non- substituted $C_1$- $C_8$- halogenoalkoxyalkyl having 1 to 5 halogen atoms, substituted or non- substituted benzyloxy, substituted or non- substituted benzylsulphenyl, substituted or non- substituted benzylamino, substituted or non- substituted phenoxy, substituted or non- substituted phenylsulphenyl, substituted or non- substituted phenylamino, a substituted or non- substituted or a 4-, 5-, 6- or 7- membered heterocycle comprising up to 4 heteroatoms selected in the list consisting of N, O, S.

Non limitative examples of suitable mixtures according to the present invention may include mixtures of:

- compound (Ia) with an insecticide compound selected in the list L1;
- compound (Ib) with an insecticide compound selected in the list L1;
- compound (Id) with an insecticide compound selected in the list L1;
- compound (Ie) with an insecticide compound selected in the list L1;
- compound (If) with an insecticide compound selected in the list L1;
- compound (Ig) with an insecticide compound selected in the list L1;
- compound (Ih) with an insecticide compound selected in the list L1;
- compound (Ii) with an insecticide compound selected in the list L1;
- compound (Ij) with an insecticide compound selected in the list L1;
- compound (Ik) with an insecticide compound selected in the list L1;
- compound (Il) with an insecticide compound selected in the list L1;

The composition according to the present invention comprises (a) a compound **selected from list L** and (b) an insecticide compound in a (a) / (b) weight ratio of from 1/1 to $1/10^{13}$. Preferably, (a) / (b) weight ratio is of from 1/10 to $1/10^{12}$. Even more preferably, (a) / (b) weight ratio is of from $1/10^2$ to $1/10^{11}$, from $1/10^2$ to $1/10^7$, from $1/10^3$ to $1/10^6$, and from $1/10^4$ to $1/10^5$.

When the composition is applied via a seed treatment, the (a)/(b) ratio can be advantageously from $1/10^2$ to $1/10^7$, preferably from $1/10^3$ to $1/10^6$, even more preferably from $1/10^4$ to $1/10^5$.
A man of ordinary skill in the art would be able to determine the adequate ratios according to the methods of application and to the compounds.

The composition of the present invention may further comprise at least one other different insecticide active ingredient (c).
Examples of suitable insecticide mixing partners may be selected in the following lists:

c1) acetylcholine receptor agonists/antagonists such as chloronicotinyls/neonicotinoids, nicotine, bensultap or cartap. Suitable examples of chloronicotinyls/neonicotinoids include acetamiprid, clothianidin, dinotefuran, imidacloprid, imidaclothiz, nitenpyram, nithiazine, thiacloprid, thiamethoxam;

c2) acetylcholinesterase (AChE) inhibitors such as carbamates and organophosphates. Suitable examples of carbamates include alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, chloethocarb, dimetilan, ethiofencarb, fenobucarb, fenothiocarb, formetanate, furathiocarb, isoprocarb, metam- sodium, methiocarb, methomyl, metolcarb, oxamyl, phosphocarb, pirimicarb, promecarb, propoxur, thiodicarb, thiofanox, triazamate, trimethacarb, XMC and xylylcarb. Suitable examples of organophosphates include acephate, azamethiphos, azinphos (- methyl, -ethyl) , bromophos- ethyl, bromfenvinfos (- methyl) , butathiofos, cadusafos, carbophenothion, chlorethoxyfos, chlorfenvinphos, chlormephos, chlorpyrifos (- methyl/- ethyl) , coumaphos, cyanofenphos, cyanophos, demeton- S- methyl, demeton- S- methylsulphon, dialifos, diazinon, dichlofenthion, dichlorvos/ DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O- salicylate, isoxathion, malathion, mecarbam, methacrifos, methamidophos, methidathion, mevinphos, monocrotophos, naled, omethoate, oxydemeton- methyl, parathion (- methyl/- ethyl) , phenthoate, phorate, phosalone, phosmet, phosphamidon, phosphocarb, phoxim, pirimiphos (- methyl/- ethyl) , profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon and vamidothion;

c3) sodium channel modulators/ voltage- gated sodium channel blockers such as pyrethroids and oxadiazines. Suitable examples of pyrethroids include acrinathrin, allethrin (d- cis- trans, d- trans) , beta- cyfluthrin, bifenthrin, bioallethrin, bioallethrin- S- cyclopentyl- isomer, bioethanomethrin, biopermethrin, bioresmethrin, chlovaporthrin, cis- cypermethrin, cis- resmethrin, cis- permethrin, clocythrin, cycloprothrin, cyfluthrin, cyhalothrin, cypermethrin (alpha-, beta-, theta-, zeta- ) , cyphenothrin, DDT, deltamethrin, empenthrin (1R- isomer) , esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma- cyhalothrin, imiprothrin, kadethrin, lambda- cyhalothrin, metofluthrin, permethrin (cis-, trans) , phenothrin (1R- trans isomer) , prallethrin, profluthrin, protrifenbute, pyresmethrin, resmethrin, RU 15525, silafluofen, tau- fluvalinate, tefluthrin, terallethrin, tetramethrin (1R- isomer) , tralocythrin, tralomethrin, transfluthrin, ZXI 8901 and pyrethrins (pyrethrum) . Suitable example of oxadiazines includes indoxacarb;

c4) semicarbazon such as metaflumizon (BAS3201)

c5) acetylcholine receptor modulators such as spinosyns. Suitable example of spinosyns includes spinosad and spinetoram;

c6) GABA-gated chloride channel antagonists such as cyclodiene organochlorines and fiproles. Suitable examples of cyclodiene organochlorines include camphechlor, chlordane, endosulfan, gamma-HCH, HCH, heptachlor, lindane and methoxychlor. Suitable examples of fiproles include acetoprole, ethiprole, fipronil, pyrafluprole, pyriprole and vaniliprole;

c7) chloride channel activators such as mectins. Suitable examples of mectins include abamectin, avermectin, emamectin, emamectin-benzoate, ivermectin, lepimectin, milbemectin and milbemycin;

c8) juvenile hormone mimetics such as diofenolan, epofenonane, fenoxycarb, hydroprene, kinoprene, methoprene, pyriproxifen, triprene;

c9) ecdysone agonists/disruptors such as diacylhydrazines. Suitable examples of diacylhydrazines include chromafenozide, halofenozide, methoxyfenozide and tebufenozide;

c10) inhibitors of chitinbiosynthesis such as benzoylureas, buprofezin and cyromazine. Suitable examples of benzoylureas include bistrifluron, chlofluazuron, diflubenzuron, fluazuron, flucycloxuron, flufenoxuron, hexaflumuron, lufenuron, novaluron, noviflumuron, penfluron, teflubenzuron and triflumuron;

c11) inhibitors of oxidative phosphorylation, ATP disruptors such as organotins and diafenthiuron. Suitable examples of organotins include azocyclotin, cyhexatin and fenbutatin oxide;

c12) decouplers of oxidative phosphorylation by disruption of the H proton gradient such as pyrroles and dinitrophenols. Suitable example of pyrroles includes chlorfenapyr. Suitable examples of dinitrophenols include binapacyrl, dinobuton, dinocap, meptyldinocarp and DNOC;

c13) site I electron transport inhibitors such as METIs, hydramethylnone and dicofol. Suitable examples of METIs include fenazaquin, fenpyroximate, pyrimidifen, pyridaben, tebufenpyrad, tolfenpyrad;

c14) site II electron transport inhibitors such as rotenone,

c15) site III electron transport inhibitors such as acequinocyl and fluacrypyrim;

c16) microbial disrupters of the intestinal membrane of insects such as Bacillus thuringiensis strains;

c17) inhibitors of lipid synthesis such as tetronic acids and tetramic acids Suitable examples of tetronic acids include spirodiclofen, spiromesifen and spirotetramate. Suitable examples of tetramic acids include cis- 3- (2, 5- dimethylphenyl)- 8- methoxy- 2- oxo- 1- azaspiro [4, 5] dec- 3- en- 4- yl ethyl carbonate (alias: carbonic acid, 3- (2, 5- dimethylphenyl)- 8- methoxy- 2- oxo- 1- azaspiro [4.5] dec- 3- en- 4- yl ethyl ester, CAS Reg. No.: 382608- 10- 8) and carbonic acid, cis- 3- (2, 5- dimethylphenyl)- 8- methoxy- 2- oxo- 1- azaspiro [4.5] dec- 3- en- 4- yl ethyl ester (CAS reg No 203313- 25- 1) ;

c18) carboxamides such as flonicamid;

c19) octopaminergic agonists such as amitraz;

c20) inhibitors of the magnesium-stimulated ATPase such as propargite;

c21) ryanodin receptor agonists such as phthalamides or Rynaxypyr (3- bromo- N- {4- chloro- 2- methyl- 6- [(methylamino) carbonyl] phenyl}- 1- (3- chloropyridin- 2- yl)- 1H- pyrazole- 5- carboxamide) . Suitable example of phthalamides includes $N^2$- [1, 1- dimethyl- 2- (methylsulphonyl) ethyl]- 3- iodo- $N^1$- [2- methyl- 4- [1, 2, 2, 2- tetrafluoro- 1- (trifluoromethyl) ethyl] phenyl]- 1, 2- benzenedicarboxamide (i.e, flubendiamide, CAS reg. No.: 272451- 65- 7) ;

c22) nereistoxin analogues such as thiocyclam hydrogen oxalate and thiosultap-sodium;

c23) biologics, hormones or pheromones such as azadirachtin, Bacillus spec , Beauveria spec , codlemone, Metarrhizium spec, Paecilomyces spec., thuringiensin and Verticillium spec,
c24) active compounds having unknown or non- specified mechanisms of action such as fumigants, selective feeding inhibitors, mite growth inhibitors, amidoflumet; benclothiaz, benzoximate, bifenazate, bromopropylate, buprofezm, chinomethioat, chlordimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyrafluprole, pyridalyl, pyriprole, sulfluramid, tetradifon, tetrasul, triarathene, verbutin, furthermore the compound 3- methylphenyl propylcarbamate (Tsumacide Z) , the compound 3- (5- chloro- 3- pyridinyl)- 8- (2, 2, 2- trifluoroethyl)- 8- azabicyclo [3.2.1] octane- 3- carbonitrile (CAS reg. No. 185982- 80- 3) and the corresponding 3- endo isomer (CAS reg. No. 185984- 60- 5) (cf. WO 96/37494, WO 98/25923) , and also preparations comprising insecticidal effective plant extracts, nematodes, fungi or viruses. Suitable examples of fumigants include aluminium phosphide, methyl bromide and sulphuryl fluoride. Suitable examples of selective feeding inhibitors include cryolite, flonicamid and pymetrozine. Suitable examples of mite growth inhibitors include clofentezine, etoxazole and hexythiazox.

Preferably, the insecticide compound (c) is chosen as being abamectin, acephate, acetamiprid, acrinathrin, aldicarb , alpha- cypermethrin, beta- cyfluthrin, bifenthrin , carbaryl , carbofuran, chlorfenapyr, chlorfluazuron, chlorpyrifos- E, clothianidin, cyfluthrin, cypermethrin, cyromazine, deltamethrin , diflubenzuron, diflubenzuron, dinotefuran , emamectin- b. , ethiprole, fenpyroximate, fipronil, flonicamid, flubendiamide, flufenoxuron, gamma- cyhalothrin, hexaflumuron, imidacloprid, indoxacarb, L- cyhalothrin, lepimectin, lufenuron, methamidophos , methiocarb , methomyl , methoxyfenozide, milbemycin, nitenpyram, novaluron, profenofos, pymetrozine, rynaxapyr, spinosad, spirodiclofen, spiromesifen, spirotetramate, tebufenozide , tebufenozide, tebufenpyrad, tebufenpyrad, tebupirimphos , teflubenzuron , tefluthrin, thiacloprid , thiamethoxam, thiodicarb, triazophos and triflumuron.

More preferably, the insecticide compound (c) is chosen as being abamectin, acetamiprid, aldicarb , beta-cyfluthrin, carbofuran, chlorpyrifos-E, clothianidin, cypermethrin, cyromazine, deltamethrin, diflubenzuron, emamectin-b., ethiprole, fipronil, gamma-cyhalothrin , imidacloprid, L-cyhalothrin, lufenuron, methiocarb , methoxyfenozide , pymetrozine, rynaxapyr, spinosad , spirodiclofen , spiromesifen , spirotetramate, tebufenozide, tebufenpyrad, tefluthrin, thiacloprid, thiamethoxam, thiodicarb and triflumuron.

Even more preferably, the insecticide compound (c) is selected in the list **L'1** consisting of abamectin, aldicarb, beta-cyfluthrin, chlorpyrifos-E, clothianidin , cyromazine, deltamethrin, diflubenzuron, emamectin-b. , fipronil, gamma-cyhalothrin, imidacloprid, L-cyhalothrin, methiocarb , pymetrozine, rynaxapyr, spinosad , spirodiclofen, spiromesifen , spirotetramate, tebufenozide, tebufenpyrad, tefluthrin , thiamethoxam and thiodicarb.

Where the third active ingredient (c) as defined above is present in the composition, this compound may be present m an amount of (a) / (b) / (c) weight ratio of from 1 / 1 / 1 to 1 / $10^{13}$ / $10^{13}$; the ratios of compounds (a), (b) and (c) varying independently from each other. Preferably, (a) / (b) / (c) weight ratio is of from 1/10/10 to 1/$10^{12}$/$10^{12}$. Even more preferably, (a) / (b) / (c) weight ratio is of from 1/$10^2$/$10^2$ to 1/$10^{11}$/$10^{11}$, from 1/$10^2$/$10^2$ to 1/$10^7$/$10^7$, from 1/$10^3$/$10^3$ to 1/$10^6$/$10^6$, from 1/$10^4$/$10^4$ to 1/$10^5$/$10^5$

When the composition is applied via a seed treatment, the (a) / (b) / (c) weight ratio can be advantageously from 1/$10^2$/$10^2$ to 1/$10^7$/$10^7$, preferably from 1/$10^3$/$10^3$ to 1/$10^6$/$10^6$, even more preferably from 1/$10^4$/$10^4$ to 1/$10^5$/$10^5$.

A man of ordinary skill in the art would be able to determine the adequate ratios according to the methods of application and to the compounds.

Non limitative examples of suitable mixtures according to the present invention may include mixtures of :

- compound (Ia) with a first insecticide compound selected in the list L1 and a second insecticide compound different from the first one selected from the list **L'1**;
- compound (Ib) with a first insecticide compound selected in the list L1 and a second insecticide compound different from the first one selected from the list **L'1**;
- compound (Id) with a first insecticide compound selected in the list L1 and a second insecticide compound different from the first one selected from the list **L'1**;
- compound (Ie) with a first insecticide compound selected in the list L1 and a second insecticide compound different from the first one selected from the list **L'1**;
- compound (If) with a first insecticide compound selected in the list L1 and a second insecticide compound different from the first one selected from the list **L'1**;
- compound (Ig) with a first insecticide compound selected in the list L1 and a second insecticide compound different from the first one selected from the list **L'1;**
- compound (Ih) with a first insecticide compound selected in the list L1 and a second insecticide compound different from the first one selected from the list **L'1**;
- compound (Ii) with a first insecticide compound selected in the list L1 and a second insecticide compound different

from the first one selected from the list **L'1**

- compound (Ij) with a first insecticide compound selected in the list L1 and a second insecticide compound different from the first one selected from the list **L'1**;
- compound (Ik) with a first insecticide compound selected in the list L1 and a second insecticide compound different from the first one selected from the list **L'1**;
- compound (Il) with a first insecticide compound selected in the list L1 and a second insecticide compound different from the first one selected from the list **L'1**;

The composition of the present invention may further comprise at least one fungicide active ingredient (d). Examples of suitable fungicide mixing partners may be selected in the following lists:

d1) a compound capable to inhibit the nucleic acid synthesis like benalaxyl, benalaxyl-M, bupirimate, clozylacon, dimethirimol, ethirimol, furalaxyl, hymexazol, mefenoxam, metalaxyl, metalaxyl-M, ofurace, oxadixyl, oxolinic acid ;
d2) a compound capable to inhibit the mitosis and cell division like benomyl, carbendazim, diethofencarb, ethaboxam, fuberidazole, pencycuron, thiabendazole, thiophanate-methyl, zoxamide;
d3) a compound capable to inhibit the respiration for example

as CI-respiration inhibitor like diflumetorim ;
as CII-respiration inhibitor like boscalid, carboxin, fenfuram, flutolanil, furametpyr, furmecyclox, mepronil, oxycarboxin, penthiopyrad, thifluzamide;
as CIII-respiration inhibitor like amisulbrom, azoxystrobin, cyazofamid, dimoxystrobin, enestrobin, famoxadone, fenamidone, fluoxastrobin, kresoxim-methyl, metominostrobin, orysastrobin, picoxystrobin, pyraclostrobin, trifloxystrobin ;

d4) a compound capable of to act as an uncoupler like dinocap, fluazinam, meptyldinocap;
d5) a compound capable to inhibit ATP production like fentin acetate, fentin chloride, fentin hydroxide, silthiofam;
d6) a compound capable to inhibit AA and protein biosynthesis like andoprim, blasticidin-S, cyprodinil, kasugamycin, kasugamycin hydrochloride hydrate, mepanipyrim, pyrimethanil;
d7) a compound capable to inhibit the signal transduction like fenpiclonil, fludioxonil, quinoxyfen;
d8) a compound capable to inhibit lipid and membrane synthesis like biphenyl, chlozolinate, edifenphos, etridiazole, iodocarb, iprobenfos, iprodione, isoprothiolane, procymidone, propamocarb, propamocarb hydrochloride, pyrazophos, tolclofos-methyl, vinclozolin;
d9) a compound capable to inhibit ergosterol biosynthesis like aldimorph, azaconazole, bitertanol, bromuconazole, cyproconazole, diclobutrazole, difenoconazole, diniconazole, diniconazole-M, dodemorph, dodemorph acetate, epoxiconazole, etaconazole, fenarimol, fenbuconazole, fenhexamid, fenpropidin, fenpropimorph, fluquinconazole, flurprimidol, flusilazole, flutriafol, furconazole, furconazole-cis, hexaconazole, imazalil, imazalil sulfate, imibenconazole, ipconazole, metconazole, myclobutanil, naftifine, nuanmol, oxpoconazole, paclobutrazol, pefurazoate, penconazole, prochloraz, propiconazole, prothioconazole, pyributicarb, pyrifenox, simeconazole, spiroxamine, tebuconazole, terbinafine, tetraconazole, triadimefon, triadimenol, tridemorph, triflumizole, triforine, triticonazole, uniconazole, viniconazole, vonconazole ;
d10) a compound capable to inhibit cell wall synthesis like benthiavalicarb, dimethomorph, flumorph, iprovalicarb, mandipropamid, polyoxins, polyoxorim, validamycin A,
d11) a compound capable to inhibit melanine biosynthesis like carpropamid, diclocymet, fenoxanil, phthalide, pyroquilon, tricyclazole;
d12) a compound capable to induce a host defence like acibenzolar- S- methyl, probenazole, tiadinil;
d13) a compound capable to have a multisite action like Bordeaux mixture, captafol, captan, chlorothalonil, copper naphthenate, copper oxide, copper oxychloride, copper preparations such as copper hydroxide, copper sulphate, dichlofluanid, dithianon, dodine, dodine free base, ferbam, fluorofolpet, folpet, guazatine, guazatine acetate, iminoctadine, iminoctadine albesilate, iminoctadine triacetate, mancopper, mancozeb, maneb, metiram, metiram zinc, oxine-copper, propineb, sulphur and sulphur preparations including calcium polysulphide, thiram, tolylfluanid, zineb, ziram ;
d14) a compound selected in the following list. (2E)- 2- (2- { [6- (3- chloro- 2- methylphenoxy)- 5- fluoropyrimidin-4- yl] oxy} phenyl)- 2- (methoxyimino)- N- methylacetamide, (2E)- 2- {2- [( { [ (1E)- 1- (3- { [ (E)- 1- fluoro- 2- phenylvinyl] oxy} phenyl) ethylidene] amino} oxy) methyl] phenyl}- 2- (methoxyimino)- N- methylacetamide, 1- (4- chlorophenyl)- 2- (1H- 1, 2, 4- triazol- 1- yl) cycloheptanol, 1- [(4- methoxyphenoxy) methyl]- 2, 2- dimethylpropyl- 1H- imidazole- 1- carboxylate, 1- methyl- N- [2- (1, 1, 2, 2- tetrafluoroethoxy) phenyl]- 3- (trifluoromethyl)- 1H- pyrazole- 4- carboxamide, 2, 3, 5, 6- tetrachloro- 4- (methylsulfonyl) pyridine, 2- butoxy- 6- iodo- 3- propyl- 4H- chromen- 4- one, 2- chloro- N- (1, 1, 3- trimethyl- 2, 3- dihydro- 1H- inden- 4- yl) nicotinamide, 2- phenylphenol and salts, 3- (difluoromethyl)- 1- methyl- N- [2- (1, 1, 2, 2- tetrafluoroethoxy) phenyl]- 1H- pyrazole- 4- carboxamide, 3- (difluoromethyl)- N- [(9R)- 9- isopropyl- 1, 2, 3, 4- tetrahydro- 1, 4- methanonaphthalen- 5- yl]- 1- methyl- 1H- pyrazole- 4- carboxamide, 3- (difluoromethyl)- N- [(9S)- 9- isopropyl- 1, 2, 3, 4- tetrahydro- 1, 4- methanonaphthalen- 5- yl]- 1- methyl- 1H- pyrazole- 4- carboxamide, 3- (difluoromethyl)- N- [4'- (3, 3- dimethylbut- 1- yn- 1- yl) biphenyl- 2- yl]- 1- methyl- 1H- pyrazole- 4- carboxamide, 3, 4, 5- trichloropyridine- 2, 6- dicarbonitrile, 3- [5- (4- chlorophenyl)- 2, 3- dimethylisoxazolidin- 3- yl] pyridine, 3- chloro- 5- (4- chlorophenyl)- 4- (2, 6- difluorophenyl)- 6- methylpyridazine 4- (4- chlorophenyl)- 5- (2, 6- difluorophenyl)- 3, 6- dimethylpyridazine, 5- chloro- 7- (4- methylpiperidin- 1- yl)- 6- (2, 4, 6- trifluorophenyl) [1, 2, 4] triazolo [1, 5- a] pyrimidine, 8- hydroxyquinoline sulfate, benthiazole, bethoxazin, capsimycin, carvone, chinomethionat, cufraneb, cyflufenamid, cymoxanil, dazomet, debacarb, dichlorophen, diclomezine, dicloran, difenzoquat, difenzoquat methylsulphate, diphenylamine, ecomate, ferimzone, flumetover, fluopicolide, fluoroimide, flusulfarnide, fosetyl- aluminium, fosetyl- calcium, fosetyl- sodium, hexachlorobenzene, irumamycin, isotianil, methasulfocarb, methyl (2E)- 2- {2- [( {cyclopropyl[(4- methoxyphenyl) imino] methyl} thio) methyl] phenyl}- 3- methoxyacrylate, methyl 1- (2, 2- dimethyl- 2, 3- dihydro- 1H- inden- 1- yl)- 1H- imidazole- 5- carboxylate, methyl isothiocyanate, metrafenone, mildiomycin, N- (3', 4'- dichloro- 5- fluorobiphenyl- 2- yl)- 3- (difluoromethyl)- 1- methyl- 1H- pyrazole- 4- carboxamide, N- (3- ethyl- 3, 5, 5- trimethylcyclohexyl)- 3- (formylamino)- 2- hydroxybenzamide, N- (4- chloro- 2- nitrophenyl)- N- ethyl- 4- methylbenzenesulfonamide, N- (4- chlorobenzyl)- 3- [3- methoxy- 4- (prop- 2- yn- 1- yloxy) phenyl] propanamide, N- [(4- chlorophenyl) (cyano) methyl]- 3- [3- methoxy- 4- (prop- 2- yn- 1- yloxy) phenyl] propanamide, N- [(5- bromo- 3- chloropyridin- 2- yl) methyl]- 2, 4- dichloronicotinamide, N- [1- (5- bromo- 3- chloropyridin- 2- yl) ethyl]- 2, 4- dichloronicotinamide, N- [1- (5- bromo- 3- chloropyridin- 2- yl) ethyl]- 2- fluoro- 4- iodonicotinamide, N- [2- (1, 3- dimethylbutyl) phenyl]- 5- fluoro- 1, 3- dimethyl- 1H- pyrazole- 4- carboxamide, N- {(Z)- [(cyclopropylmethoxy) imino] [6- (difluoromethoxy)- 2, 3- difluorophenyl] methyl}- 2- phenylacetamide, N- {2- [1, 1'- bi (cyclopropyl)- 2- yl] phenyl}- 3- (difluoromethyl)- 1- methyl- 1H- pyrazole- 4- carboxamide, N- {2- [3- chloro- 5- (trifluoromethyl) pyridin- 2- yl] ethyl}- 2- (trifluoromethyl) benzamide, natamycin, N- ethyl- N- methyl- N'- {2- methyl- 5- (trifluoromethyl)- 4- [3- (trimethylsilyl) propoxy] phenyl} imidoformamide, N- ethyl- N- methyl- N'- {2- methyl- 5- (difluoromethyl)- 4- [3- (trimethylsilyl) propoxy] phenyl} imidoformamide, nickel dimethyldithiocarbamate, nitrothal- isopropyl, O- {1- [(4- methoxyphenoxy) methyl]- 2, 2- dimethylpropyl} 1H- imidazole- 1- carbothioate, octhilinone, oxamocarb, oxyfenthiin, pentachlorophenol and salts, phosphorous acid and its salts, piperalin, propamocarb fosetylate, propanosine- sodium, proquinazid, pyribencarb, pyrrolnitrine, quintozene, S- allyl- 5- amino- 2- isopropyl- 4- (2- methylphenyl)- 3- oxo- 2, 3- dihydro- 1H- pyrazole- 1- carbothioate, tecloftalam, tecnazene, triazoxide, trichlamide, valiphenal, zarilamid.

Preferably, the fungicide compound (d) is selected in the list consisting of: N- [2- (1, 3- dimethylbutyl) phenyl]- 5- fluoro- 1, 3- dimethyl- 1H- pyrazole- 4- carboxamide, benalaxyl, ethirimol, hymexazol, mefenoxam, metalaxyl, metalaxyl- M, benomyl, carbendazim, fuberidazole, pencycuron, thiabendazole, zoxamide, boscalid, carboxin, flutolanil, furametpyr, penthiopyrad, thifluzamide, azoxystrobin, cyazofamid, dimoxystrobin, famoxadone, fenamidone, fluoxastrobin, metominostrobin, orysastrobin, picoxystrobin, pyraclostrobin, trifloxystrobin, fluazinam, silthiofam, cyprodinil, kasugamycin, mepanipyrim, pyrimethanil, fenpiclonil, fludioxonil, iprodione, procymidone, propamocarb, tolclofos- methyl, bitertanol, cyproconazole, difenoconazole, diniconazole, epoxiconazole, etaconazole, fenhexamid, fluquinconazole, flutriafol, hexaconazole, imazalil, imibenconazole, ipconazole, metconazole, prochloraz, prothioconazole, simeconazole, spiroxamine, tebuconazole, tetraconazole, triadimefon, triadimenol, triflumizole, triticonazole, carpropamid, tolylfluanid, fluopicolide, isotianil, N- {2- [1, 1'- bi (cyclopropyl)- 2- yl] phenyl}- 3- (difluoromethyl)-, 1- methyl- 1H- pyrazole- 4- carboxamide, propamocarb fosetylate, triazoxide, N- (3', 4'- dichloro- 5- fluorobiphenyl- 2- yl)- 3- (difluoromethyl)- 1- methyl- 1H- pyrazole- 4- carboxamide, N- {2- [3- chloro- 5- (trifluoromethyl) pyridin- 2- yl] ethyl}- 2- (trifluoromethyl) benzamide.

More preferably, the fungicide compound (d) is selected in the list L2 consisting of:

N- [2- (1, 3- dimethylbutyl) phenyl]- 5- fluoro- 1, 3- dimethyl- 1H- pyrazole- 4- carboxamide, metalaxyl, carbendazim, pencycuron, fenamidone, fluoxastrobin, trifloxystrobin, pyrimethanil, iprodione, bitertanol, fluquinconazole, ipconazole, prochloraz, prothloconazole, tebuconazole, triadimenol, triticonazole, carpropamid, tolylfluanid, fluopicolide, isotianil, N- {2- [1, 1'- bi (cyclopropyl)- 2- yl] phenyl}- 3- (difluoromethyl)-, 1- methyl- 1H- pyrazole- 4- carboxamide, propamocarb fosetylate, N- (3', 4'- dichloro- 5- fluorobiphenyl- 2- yl)- 3- (difluoromethyl)- 1- methyl- 1H- pyrazole- 4- carboxamide, N- {2- [3- chloro- 5- (trifluoromethyl) pyridin- 2- yl] ethyl}- 2- (trifluoromethyl) benzamide, fludioxonil, mefenoxam, pyraclostrobin, boscalid, azoxystrobin.

Where the third active ingredient (d) as defined above is present in the composition, this compound may be present in an amount of (a) / (b) / (d) weight ratio of from 1/1/1 to 1 / $10^{13}$ / $10^{14}$; the ratios of compounds (a), (b) and (d) varying independently from each other. Preferably, (a) / (b) / (d) weight ratio is of from 1/10/10 to 1/$10^{12}$/$10^{13}$. Even more preferably, (a) / (b) / (d) weight ratio is of from 1/$10^2$/$10^2$ to 1/$10^{11}$/$10^{12}$, from 1/$10^2$/$10^2$ to 1/$10^7$/$10^8$, from 1/$10^3$/$10^3$ to 1/$10^6$/$10^6$ , from 1/$10^4$/$10^3$ to 1/$10^5$/$10^5$ When the composition is applied via a seed treatment, the (a) / (b) / (d) weight

ratio can be advantageously from $1/10^2/10^2$ to $1/10^7/10^8$, preferably from $1/10^3/10^3$ to $1/10^6/10^6$, even more preferably from $1/10^4/10^3$ to $1/10^5/10^5$.
A man of ordinary skill in the art would be able to determine the adequate ratios according to the methods of application and to the compounds.

Non limitative examples of suitable mixtures according to the present invention may include mixtures of :

- compound (Ia) with an insecticide compound selected from the list L1 and a fungicide compound selected in the list L2;
- compound (Ib) with an insecticide compound selected from the list L1 and a fungicide compound selected in the list L2;
- compound (Id) with an insecticide compound selected from the list L1 and a fungicide compound selected in the list L2;
- compound (Ie) with an insecticide compound selected from the list L1 and a fungicide compound selected in the list L2;
- compound (If) with an insecticide compound selected from the list L1 and a fungicide compound selected in the list L2;
- compound (Ig) with an insecticide compound selected from the list L1 and a fungicide compound selected in the list L2;
- compound (Ih) with an insecticide compound selected from the list L1 and a fungicide compound selected in the list L2;
- compound (Ii) with an insecticide compound selected from the list L1 and a fungicide compound selected in the list L2;
- compound (Ij) with an insecticide compound selected from the list L1 and a fungicide compound selected in the list L2;
- compound (Ik) with an insecticide compound selected from the list L1 and a fungicide compound selected in the list L2;
- compound (Il) with an insecticide compound selected from the list L1 and a fungicide compound selected in the list L2;

The composition according to the present invention may further comprise a supplementation with the AM fungi, which can be added as spores or other inoculum. Such AM fungi could be for example *Glomus sp., Gigaspora sp.,* or other fungi from the group Glomeromycota.

The composition according to the present invention may further comprise another additional component such as an agriculturally acceptable support, carrier or filler.

In the present specification, the term "support" denotes a natural or synthetic, organic or inorganic material with which the active material is combined to make it easier to apply, notably to the parts of the plant. This support is thus generally inert and should be agriculturally acceptable. The support may be a solid or a liquid. Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

The composition may also comprise other additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the above compounds containing sulphate, sulphonate and phosphate functions. The presence of at least one surfactant is generally essential when the active material and/or the inert support are water-insoluble and when the vector agent for the application is water. Preferably, surfactant content may be comprised between 5% and 40% by weight of the composition.

Additional components may also be included, e.g. protective colloids, adhesives, thickeners, thixotropic agents, penetration agents, stabilisers, sequestering agents. More generally, the active materials can be combined with any solid or liquid additive, which complies with the usual formulation techniques.

In general, the composition according to the invention may contain from 0.05 to 99% (by weight) of active material, preferably 10 to 70% by weight.

Compositions according to the present invention can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

These compositions include not only compositions which are ready to be applied to the plant or seed to be treated, or in furrow in the soil, by means of a suitable device, such as a spraying or dusting device, but also concentrated commercial compositions which must be diluted before they are applied to the crop.

Protocols to synthesise the compound of formula (I) according to the invention are well known by those skilled in the art (Bouwmeester et al, 2003, Current opinion in Plant Biology 6: 358- 364; Mangnus et al., 1992, J. Agric. Food Chem. 40 (6) : 697- 700; Frischmuth et al, 1991, Tetrahedron 47: 9793- 9806; Mwakaboko A.S., 2003, "Synthesis and biological evaluation of new strigolactone analogues as germination stimulants for the seeds of the parasitic weeds

Striga and Orobanche spp", Doctoral thesis, http: // webdoc.ubn.kun.nl /mono/m/ mwakaboko a/ syntanbie.pdf) .
As an example, Mwakaboko A.S. discloses in his thesis the synthesis of some structurally modified strigolactones (chapter 8 & 9) .

The pesticidal compositions of the present invention can be used to curatively or preventively control insects, but also to increase the yield, growth, or vigor of the plant.

Thus, according to a further aspect of the present invention, there is provided a method for curatively or preventively controlling insects and/or increasing the yield, growth or vigor of a plant characterised in that a composition as hereinbefore defined is applied via seed treatment, foliar application, stem application or drench/ drip application (chemigation) to the seed, the plant and/or to the fruit of the plant, or to soil, particularly in furrow, and/or to inert substrate (e.g. inorganic substrates (e.g. sand, rockwool, glasswool, expanded minerals (e.g. perlite, vermiculite, zeolite, expanded clay) ) , Pumice, Pyroclastic materials/ tuff, synthetic organic substrates (e.g. Polyurethane) , organic substrates (e.g. peat, composts, tree waste products (e.g. coir, wood fibre/ chips, tree bark) ) and/or to a liquid substrate (e.g. floating hydroponic systems, Nutrient Film Technique, Aeroponics) in which the plant is growing or in which it is desired to grow.

The composition as used against pests and diseases of crops comprises an effective and non-phytotoxic amount of an insecticide compound.

The expression "effective and non-phytotoxic amount" means an amount of composition according to the invention which is sufficient to control or destroy the pests and diseases present or liable to appear on the crops, and which does not entail any appreciable symptom of phytotoxicity for the said crops. Such an amount can vary within a wide range depending on the pests and diseases to be combated or controlled, the type of crop, the climatic conditions and the compounds included in the composition according to the invention.

This amount can be determined by systematic field trials, which are within the capabilities of a person skilled in the art.

The method of treatment according to the present invention is useful to treat propagation material such as tubers or rhizomes, but also seeds, seedlings or seedlings pricking out and plants or plants pricking out. This method of treatment can also be useful to treat roots. The method of treatment according to the present invention can also be useful to treat the overground parts of the plant such as trunks, stems or stalks, leaves, flowers and fruits of the concerned plant.
Plants that can be protected by the method according to the invention can be legumes or non-leguminous plants.
Among the plants that can be protected by the method according to the present invention, mention may be made of cotton; flax; vine; fruit or vegetable crops such as *Rosaceae sp.* (for instance pip fruit such as apples and pears, but also stone fruit such as apricots, almonds and peaches), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for instance banana trees and plantins), *Rubiaceae sp., Theaceae sp., Sterculiceae sp., Rutaceae sp.* (for instance lemons, oranges and grapefruit); *Solanaceae sp.* (for instance tomatoes), *Liliaceae sp., Asteraceae sp.* (for instance lettuces), *Umbelliferae sp., Cruciferae sp., Chenopodiaceae sp., Cucurbitaceae sp., Papilionaceae sp.* (for instance peas), *Rosaceae sp.* (for instance strawberries); major crops such as *Graminae sp.* (for instance maize, lawn or cereals such as wheat, rice, barley and triticale), *Asteraceae sp.* (for instance sunflower), *Cruciferae sp.* (for instance colza), *Fabacae sp.* (for instance peanuts), *Papilionaceae sp.* (for instance soybean), *Solanaceae sp.* (for instance potatoes), *Chenopodiaceae sp.* (for instance beetroots); horticultural and forest crops; as well as genetically modified homologues of these crops.
Among the legumes, mention may be made of soybean, pea, horse bean, groundnut, bean, lupin, alfalfa or clover.

The composition according to the present invention is well tolerated by plants, have favourable homeotherm toxicity and are environmentally friendly; it is suitable for protecting plants and plant organs, for increasing harvest yields, for improving the quality of the harvested material and for controlling animal pests, in particular insects, arachnids and nematodes encountered in agriculture, in forests, in gardens and leisure facilities, in the protection of stored products and materials and in the hygiene sector. It is preferably used as crop protection agents. It is active against normally sensitive and resistant species and against all or some stages of development. Among the animal pests that can also be controlled by the method according to the present invention, mention may be made of :

Pest from the order of the Isopoda, for example, Oniscus asellus, Armadillidium vulgare and Porcellio scaber;
Pest from the order of the Diplopoda, for example, Blaniulus guttulatus;
Pest from the order of the Chilopoda, for example, Geophilus carpophagus and Scutigera spp.;
Pest from the order of the Symphyla, for example, Scutigerella immaculate;
Pest from the order of the Thysanura, for example, Lepisma saccharina.
Pest from the order of the Collembola, for example, Onychiurus armatus;
Pest from the order of the Orthoptera, for example, Acheta domesticus, Gryllotalpa spp., Locusta migratoria migratorioides, Melanoplus spp. and Schistocerca gregaria;
Pest from the order of the Blattaria, for example, Blatta orientalis, Periplaneta americana, Leucophaea maderae and Blattella germanica;

Pest from the order of the Dermaptera, for example, Forficula auricularia;
Pest from the order of the Isoptera, for example, Reticulitermes spp.;
Pest from the order of the Phthiraptera, for example, Pediculus humanus corporis, Haematopinus spp., Linognathus spp., Trichodectes spp., Damalinia spp.;
Pest from the order of the Thysanoptera, for example, Hercinothrips femoralis, Thrips tabaci, Thrips palmi, Frankliniella accidentalis;
Pest from the order of the Heteroptera, for example, Eurygaster spp., Dysdercus intermedius, Piesma quadrata, Cimex lectularius, Rhodnius prolixus and Triatoma spp.;
Pest from the order of the Homoptera, for example, Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium comi, Saissetia oleae, Laodelphax striatellus, Nilaparvata lugens, Aonidiella aurantii, Aspidiotus hederae, Pseudococcus spp. and Psylla spp.;
Pest from the order of the Lepidoptera, for example, Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp. and Oulema oryzae;
Pest from the order of the Coleoptera, for example, Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica and Lissorhoptrus oryzophilus;
Pest from the order of the Hymenoptera, for example, Diprion spp., Hoplocampa spp., Lasius spp., Monomorium pharaonis and Vespa spp.;
Pest from the order of the Diptera, for example, Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp. and Liriomyza spp.;
Pest from the order of the Siphonaptera, for example, Xenopsylla cheopis and Ceratophyllus spp.;
Pest from the class of the Arachnida, for example, Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp. and Brevipalpus spp.;

The plant-parasitic nematodes such as Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp. and Bursaphelenchus spp.

The composition according to the present invention may also be used against pests and diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting one or more compounds of the present invention, or a composition according to the invention; this includes for example direct application, spraying, dipping, injection or any other suitable means.

The dose of active material usually applied in the treatment according to the present invention is generally and advantageously between 10 and 800 g/ha, preferably between 50 and 300 g/ha for applications in foliar treatment. If a drench/drip/in furrow application is possible, the dose can be lower, especially in artificial substrates like rockwool or perlite. The dose of active substance applied is generally and advantageously between 0.5 and 200 g per 100 kg of seed, preferably between 1 and 150 g per 100 kg of seed in the case of seed treatment. It is clearly understood that the doses indicated above are given as illustrative examples of the invention. A person skilled in the art will know how to adapt the application doses according to the nature of the crop to be treated.

The composition according to the present invention may also be used in the treatment of genetically modified organisms with the compounds according to the invention or the agrochemical compositions according to the invention.

Genetically modified plants are plants into whose genome a heterologous gene encoding a protein of interest has been stably integrated. The expression "heterologous gene encoding a protein of interest" essentially means genes which give the transformed plant new agronomic properties, or genes for improving the agronomic quality of the transformed plant.

**Biological tests:**

**1. Calculation of the efficacy**

The expected efficacy of a given combination of two compounds is calculated as follows (see Colby, S.R., "Calculating Synergistic and antagonistic Responses of Herbicide Combinations", Weeds 15, pp. 20-22, 1967):

If
X is the efficacy expressed in % mortality of the untreated control for test compound A at a concentration of m ppm respectively m g/ha,
Y is the efficacy expressed in % mortality of the untreated control for test compound
B at a concentration of n ppm respectively n g/ha,
E is the efficacy expressed in % mortality of the untreated control using the mixture of A and B at m and n ppm respectively m and n g/ha,
then is

$$E = X + Y - \frac{X \times Y}{100}$$

If the observed insecticidal efficacy of the combination is higher than the one calculated as "E", then the combination of the two compounds is more than additive, i.e., there is a synergistic effect.

**2. Myzus persicae - test**

| | |
|---|---|
| Solvent: | 7 parts by weight of dimethylformamide |
| Emulsifier: | 2 parts by weight of alkylaryl polyglycolether |

To produce a suitable preparation of active compound, 1 part by weight of active compound is mixed with the stated amount of solvent and emulsifier, and the concentrate is diluted with emulsifier-containing water to the desired concentration.
Cabbage leaves (*Brassica oleracea*) which are heavily infested by the green peach aphid (*Myzus persicae*) are treated by being dipped into the preparation of the active compound of the desired concentration.
After the specified period of time, the mortality in % is determined. 100 % means that all the aphids have been killed; 0 % means that none of the aphids have been killed.
According to the present application in this test e.g. the following combination shows a synergistic effect in comparison to the single compounds:

Table A

| plant damaging insects<br>**Myzus persicae - test** | | |
|---|---|---|
| active compound | active compound concentration in ppm | mortality in % after 4[d] |
| **Compound A** | 0,00003 | 0 |
| | 0,000003 | 0 |

(continued)

| plant damaging insects<br>**Myzus persicae - test**<br>active compound | active compound concentration in ppm | mortality in % after $4^d$ | |
|---|---|---|---|
| 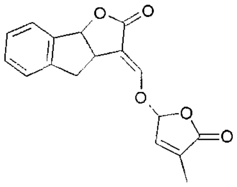 | | | |
| **Imidacloprid** | 0,16 | 10 | |
| **Compound A + Imidacloprid (1 : 5333,3)**<br>according to the invention | **0,00003 + 0,16** | <u>obs</u>.*<br>**85** | <u>cal</u>.**<br>**10** |
| **Compound A + Imidacloprid (1 : 53333,3)**<br>according to the invention | **0,000003 + 0,16** | <u>obs</u>.*<br>**75** | <u>cal</u>.**<br>**10** |
| *** obs. = observed insecticidal efficacy**<br>**** cal. = efficacy calculated with Colby-formula** | | | |

**3. Phaedon cochleariae test**

| | |
|---|---|
| Solvent: | 7 parts by weight of dimethylformamide |
| Emulsifier: | 2 parts by weight of alkylaryl polyglycolether |

To produce a suitable preparation of active compound, 1 part by weight of active compound is mixed with the stated amount of solvent and emulsifier, and the concentrate is diluted with emulsifier-containing water to the desired concentration.
Cabbage leaves (*Brassica oleracea*) are treated by being dipped into the preparation of the active compound of the desired concentration and are infested with larvae of the mustard beetle (*Phaedon cochleariae*) as long as the leaves are still moist.
After the specified period of time, the mortality in % is determined. 100 % means that all the beetle larvae have been killed; 0 % means that none of the beetle larvae have been killed.
According to the present application in this test e.g. the following combination shows a synergistic effect in comparison to the single compounds:

Table B

| plant damaging insects<br>**Phaedon cochleariae test**<br>active compound | active compound concentration in ppm | mortality in % after $4^d$ |
|---|---|---|
| **Compound A**<br>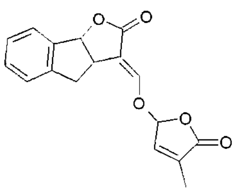 | 0,00003<br>0,000003 | 0<br>0 |

(continued)

| plant damaging insects<br>**Phaedon cochleariae test** | | | |
|---|---|---|---|
| active compound | active compound concentration in ppm | mortality in % after 4[d] | |
| **Imidacloprid** | 20 | 70 | |
| **Compound A + Imidacloprid (1 : 666666,67)**<br>according to the invention | <br>**0,00003 + 20** | **obs.***<br>**100** | **cal.****<br>**70** |
| **Compound A + Imidacloprid (1 : 6666666,67)**<br>according to the invention | <br>**0,000003 + 20** | **obs.***<br>**95** | **cal.****<br>**70** |
| * obs. = observed insecticidal efficacy<br>** cal. = efficacy calculated with Colby-formula | | | |

## Claims

1. A composition comprising :

    a) a strigolactone derivative selected in the list consisting of:

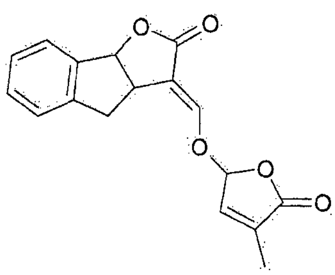

(Ia)

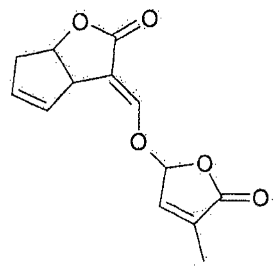

(Ib)

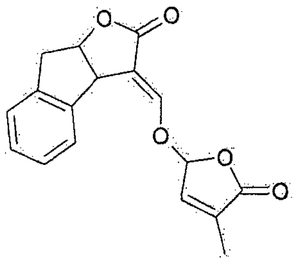

(Id)

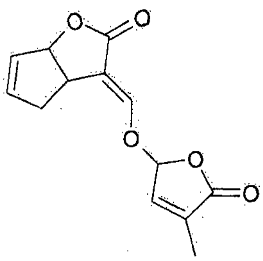

(Ie)

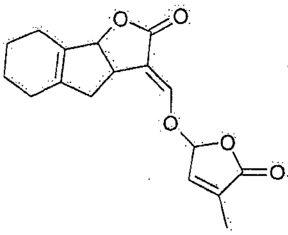

(If)

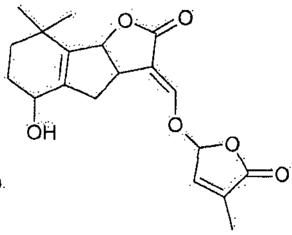

(Ig)

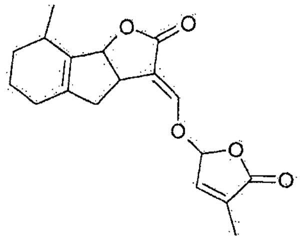

(Ih)

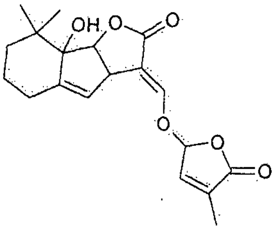

(Ij)

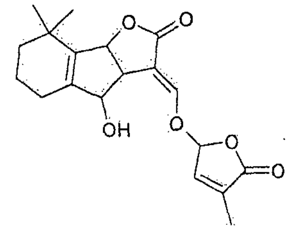

(Ik)

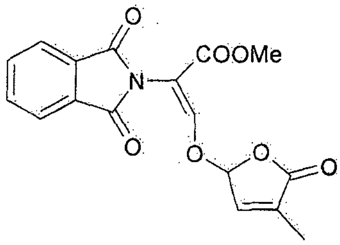

(Il)

and

b) an insecticide compound selected in the list consisting of abamectin, clothianidin, imidacloprid, **chlorantraniliprole** and thiodicarb;

in a (a)/(b) weight ratio of from 1/1 to $1/10^{13}$

**2.** A composition according to claim 1 wherein the strigolactone derivative is selected in the list consisting of

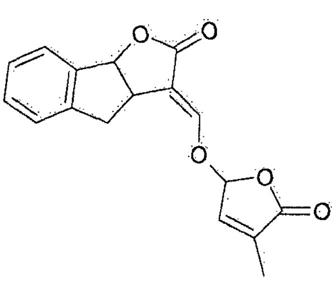

(Ia)

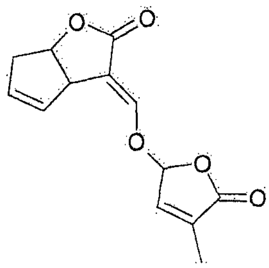

(Ib)

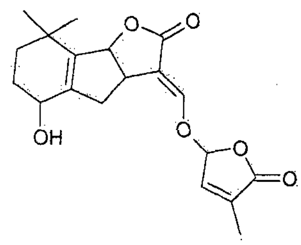

(Ig)

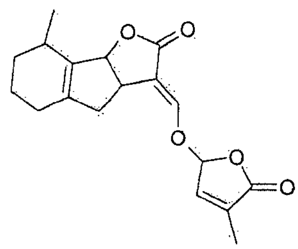

(Ih)

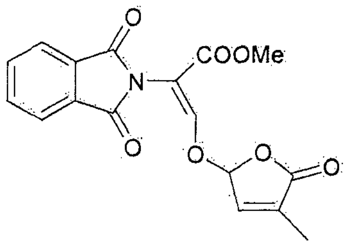

(II)

**3.** A composition according to any one of the claims 1 to 2 further comprising an insecticide compound (c).

**4.** A composition according to claim 3, **characterised in that** the insecticide compound (c) is selected from abamectin, acephate, acetamiprid, acrinathrin, aldicarb, alpha-cypermethrin, betacyfluthrin, bifenthrin, carbaryl, carbofuran , chlorfenapyr, chlorfluazuron, chlorpyrifos-E, clothianidin, cyfluthrin, cypermethrin, cyromazine, deltamethrin, diflubenzuron, diflubenzuron, dinotefuran, emamectin-b. , ethiprole, fenpyroximate, fipronil, flonicamid, flubendiamide , flufenoxuron, gammacyhalothrin , hexaflumuron, imidacloprid, indoxacarb, L-cyhalothrin, lepimectin, lufenuron, methamidophos, methiocarb, methomyl, methoxyfenozide, milbemycin, nitenpyram, novaluron, profenofos, pymetrozine, **chlorantraniliprole**, spinosad, spirodiclofen, spiromesifen, spirotetramate, tebufenozide, tebufenozide, tebufenpyrad, tebufenpyrad, tebupirimphos, teflubenzuron, tefluthrin, thiacloprid, thiamethoxam, thiodicarb, triazophos and triflumuron.

**5.** A composition according to any one of the claims 1 to 4 further comprising a fungicide compound (d)

**6.** A composition according to claim 5, **characterised in that** the fungicidal compound (d) is selected from N-[2-(1,3-dimethylbutyl)phenyl]-5-fluoro-1,3-dimethyl-1H-pyrazole-4-carboxamide, metalaxyl, carbendazim, pencycuron, fenamidone, fluoxastrobin, trifloxystrobin, pyrimethanil, iprodione, bitertanol, fluquinconazole, ipconazole, prochloraz, prothioconazole, tebuconazole, triadimenol, triticonazole, carpropamid, tolylfluanid, fluopicolide, isotianil, N-{2-[1,1'-bi(cyclopropyl)-2-yl]phenyl}-3-(difluoromethyl)-, 1-methyl-1H-pyrazole-4-carboxamide, propamocarb fosetylate, N-(3',4'-dichloro-5-fluorobiphenyl-2-yl)-3-(difluoromethyl)-1-methyl-1H-pyrazole-4-carboxamide, N-{2-[3-chloro-5-(trifluoromethyl)pyridin-2-yl]ethyl}-2-(trifluoromethyl)benzamide, fludioxonil, mefenoxam, pyraclostrobin, boscalid, azoxystrobin.

**7.** A composition according to any one of the claims 1 to 6, **characterised in that** it further comprises an agriculturally acceptable support, carrier, filler and/or surfactant.

**8.** A composition according to any one of the claims 1 to 7 **characterized in that** it further comprises a supplementation with Arbuscular mycorrhizae fungi

**9.** A method for curatively or preventively controlling insects **characterised in that** an effective and non-phytotoxic amount of a composition according to any one of the claims 1 to 8 is applied via seed treatment, foliar application, stem application, drench/drip application (chemigation) to the seed, the plant or to the fruit of the plant or to soil or

to inert substrate, Pumice, Pyroclastic materials/tuff, synthetic organic substrates, organic substrates or to a liquid substrate in which the plant is growing or in which it is desired to grow

**10.** A method according to claim 9, **characterized in that** the composition is applied in furrow on the soil

**11.** The use of the composition as claimed in any one of the claims 1 to 8 for curatively or preventively controlling insects.

**12.** The use of the composition as claimed in any one of the claims 1 to 8 for preventively controlling insects and parasitic weed species.

**Patentansprüche**

**1.** Zusammensetzung, die Folgendes umfasst:

a) ein Strigolactonderivat, ausgewählt aus der Reihe:

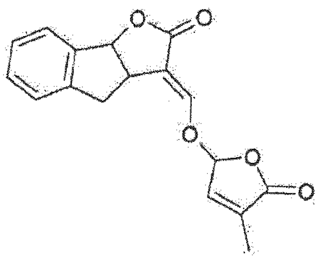

(Ia)

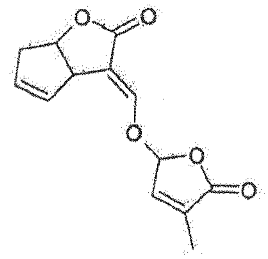

(Ib)

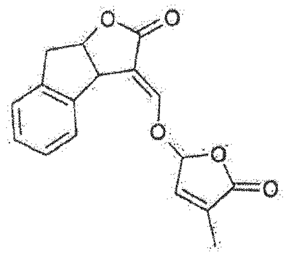

(Id)

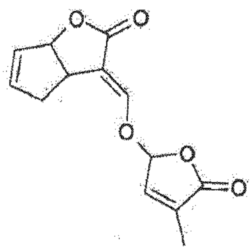

(Ie)

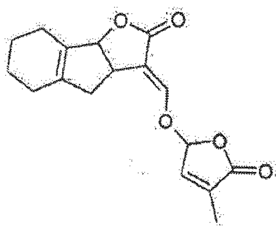

(If)

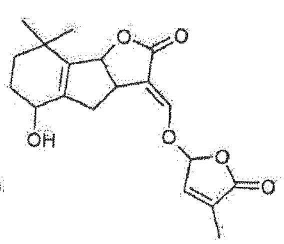

(Ig)

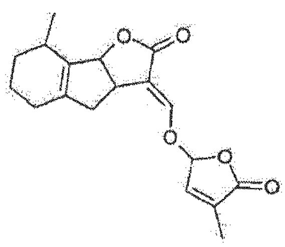

(Ih)

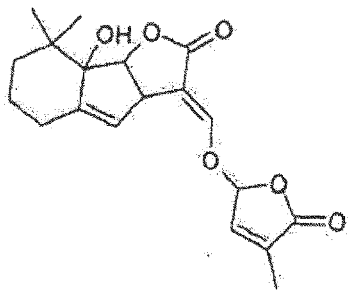

(Ij)

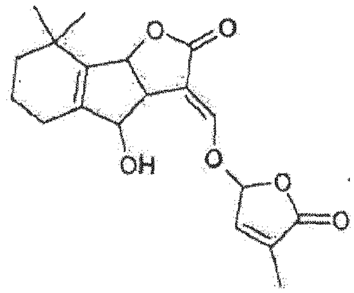

(Ik)

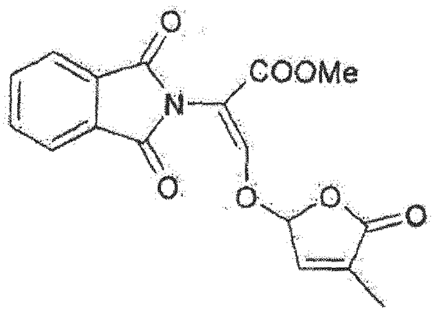

(Il)

und

b) eine Insektizidverbindung, ausgewählt aus der Reihe Abamectin, Clothianidin, Imidacloprid, Chlorantraniliprole und Thiodicarb; in einem Gewichtsverhältnis (a)/(b) von 1/1 bis $1/10^{13}$.

**2.** Zusammensetzung nach Anspruch 1, in der das Strigolactonderivat aus der Reihe

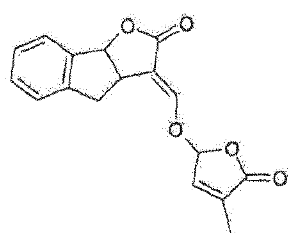

(Ia)

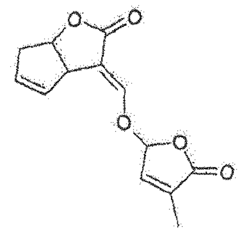

(Ib)

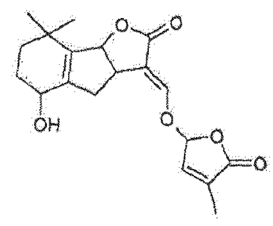

(Ig)

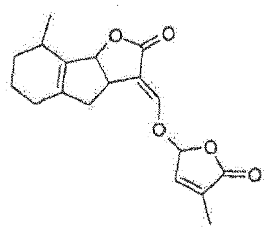

(Ih)

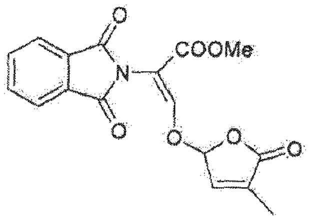

(II)

ausgewählt ist.

3. Zusammensetzung nach einem der Ansprüche 1 bis 2, die weiterhin eine insektizide Verbindung (c) umfasst.

4. Zusammensetzung nach Anspruch 3, **dadurch gekennzeichnet, dass** die Insektizidverbindung (c) aus der folgenden Reihe ausgewählt ist: Abamectin, Acephat, Acetamiprid, Acrinathrin, Aldicarb, alpha-Cypermethrin, beta-Cyfluthrin, Bifenthrin, Carbaryl, Carbofuran, Chlorfenapyr, Chlorfluazuron, Chlorpyrifos-E, Clothianidin, Cyfluthrin, Cypermethrin, Cyromazin, Deltamethrin, Diflubenzuron, Dinotefuran, Emamectin-b, Ethiprol, Fenpyroximat, Fipronil, Flonicamid, Flubendiamid, Flufenoxuron, gamma-Cyhalothrin, Hexaflumuron, Imidacloprid, Indoxacarb, L-Cyhalothrin, Lepimectin, Lufenuron, Methamidophos, Methiocarb, Methomyl, Methoxyfenozid, Milbemycin, Nitenpyram, Novaluron, Profenofos, Pymetrozin, Chlorantraniliprol, Spinosad, Spirodiclofen, Spiromesifen, Spirotetramat, Tebufenozid, Tebufenpyrad, Tebupirimphos, Teflubenzuron, Tefluthrin, Thiacloprid, Thiamethoxam, Thiodicarb, Trizophos und Triflumuron.

5. Zusammensetzung nach einem der Ansprüche 1 bis 4, die weiterhin eine Fungizidverbindung (d) enthält.

6. Zusammensetzung nach Anspruch 5, **dadurch gekennzeichnet, dass** die fungizide Verbindung (d) aus der folgenden Reihe ausgewählt ist: N-[2-(1,3-Dimethylbutyl)phenyl]-5-fluor-1,3-dimethyl-1H-pyrazol-4-carboxamid, Metalaxyl, Carbendazim, Pencycuron, Fenamidon, Fluoxastrobin, Trifloxystrobin, Pyrimethanil, Iprodin, Bitertanol, Fluquinoconazol, Ipconazol, Prochloraz, Prothioconazol, Tebuconazol, Triadimenol, Triticonazol, Carpropamid, Tolylfluanid, Fluopicolid, Isotianil, N-{2-[1,1'-Bi(cyclopropyl)-2-yl]phenyl}-3-(difluormethyl)-, 1-Methyl-1H-pyrazol-4-carboxamid, Propamocarbfosetylat, N-(3',4'-Dichlor-5-fluorbiphenyl-2-yl)-3-(difluormethyl)-1-methyl-1H-pyrazol-4-carboxamid, N-{2-[3-Chlor-5-(trifluormethyl)pyridin-2-yl]ethyl}-2-(trifluormethyl)benzamid, Fludioxonil, Mefenoxam, Pyraclostrobin, Boscalid, Azoxystrobin.

7. Zusammensetzung nach einem der Ansprüche 1 bis 6, **dadurch gekennzeichnet, dass** sie weiterhin einen landwirtschaftlich unbedenklichen Träger, Grundstoff, Füllstoff und/oder ein landwirtschaftlich unbedenkliches Tensid umfasst.

8. Zusammensetzung nach einem der Ansprüche 1 bis 7, **dadurch gekennzeichnet, dass** sie weiterhin eine Ergänzung mit Arbuskulären Mykorrhiza-Pilzen umfasst.

9. Verfahren für die kurative oder präventive Bekämpfung von Insekten, **dadurch gekennzeichnet, dass** man eine wirksame und nichtphytotoxische Menge einer Zusammensetzung nach einem der Ansprüche 1 bis 8 durch Saatgutbehandlung, Blattapplikation, Stängelapplikation, Tränk/Tröpfchenapplikation (Chemigation) auf den Samen, die Pflanze oder die Frucht der Pflanze oder auf Boden oder auf inertes Substrat, Bimsstein, pyroklastisches Material/Tuff, synthetische organische Substrate, organische Substrate oder auf ein flüssiges Substrat, in dem die Pflanze wächst oder wachsen soll, ausbringt.

10. Verfahren nach Anspruch 9, **dadurch gekennzeichnet, dass** die Zusammensetzung in die Furche auf den Boden ausgebracht wird.

11. Verwendung der Zusammensetzung nach einem der Ansprüche 1 bis 8 für die kurative oder präventive Bekämpfung von Insekten.

12. Verwendung der Zusammensetzung nach einem der Ansprüche 1 bis 8 für die präventive Bekämpfung von Insekten und parasitischen Unkrautarten.

## Revendications

**1.** Composition comprenant :

a) un dérivé de strigolactone choisi dans la liste constituée par :

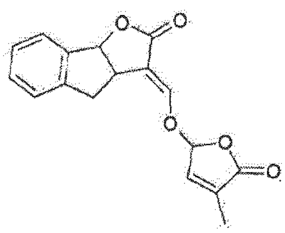

(Ia)

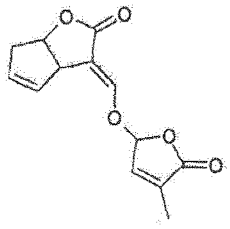

(Ib)

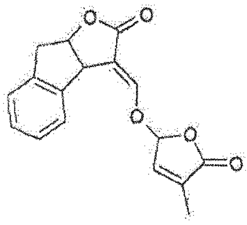

(Id)

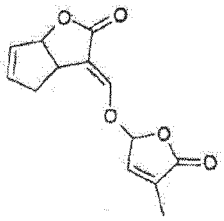

(Ie)

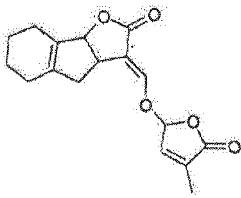

(If)

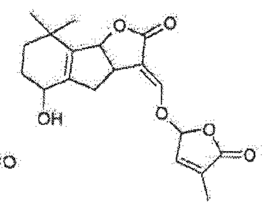

(Ig)

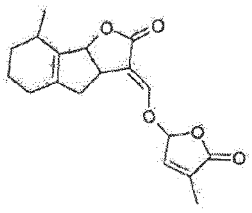

(Ih)

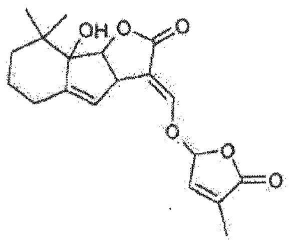

(Ij)

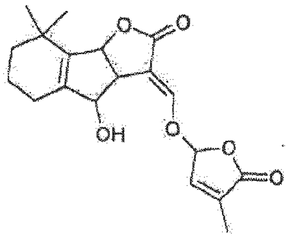

(Ik)

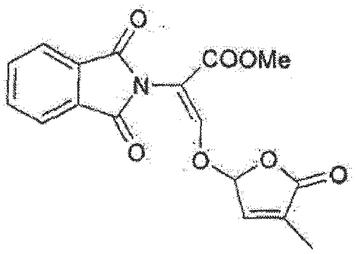

(II)

et

b) un composé insecticide choisi dans la liste constituée par l'abamectine, la clothianidine, l'imidaclopride, le chlorantraniliprole et le thiodicarbe ;

selon un rapport pondéral (a)/(b) allant de 1/1 à 1/10$^{13}$.

2. Composition selon la revendication 1, dans laquelle le dérivé de strigolactone est choisi dans la liste constituée par

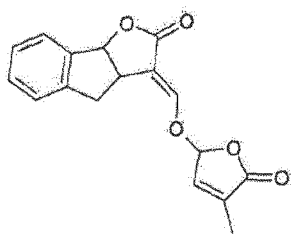

(Ia)

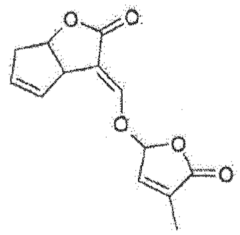

(Ib)

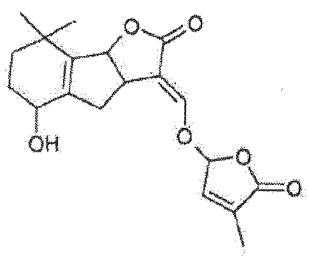

(Ig)

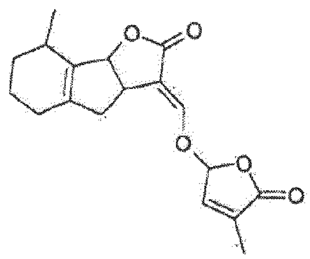

(Ih)

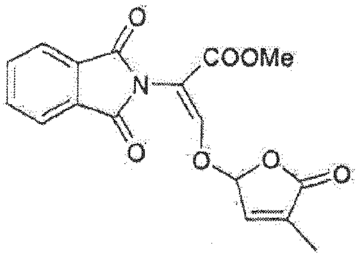

(II)

3. Composition selon l'une quelconque des revendications 1 à 2, comprenant en outre un composé insecticide (c).

4. Composition selon la revendication 3, **caractérisée en ce que** le composé insecticide (c) est choisi parmi l'abamectine, l'acéphate, l'acétamipride, l'acrinathrine, l'aldicarbe, l'alpha-cyperméthrine, la bêta-cyfluthrine, la bifenthrine, le carbaryl, le carbofuran, le chlorfénapyr, le chlorfluazuron, le chlorpyrifos-E, la clothianidine, la cyfluthrine, la cyperméthrine, la cyromazine, la deltaméthrine, le diflubenzuron, le dinotéfurane, l'émamectine-b, l'éthiprole, le fenpyroximate, le fipronil, le flonicamide, le flubendiamide, le flufenoxuron, la gamma-cyhalothrine, l'hexaflumuron, l'imidaclopride, l'indoxacarbe, la L-cyhalothrine, la lépimectine, le lufénuron, le méthamidophos, le méthiocarbe, le méthomyl, le méthoxyfénozide, la milbémycine, le nitenpyram, le novaluron, le profénofos, la pymétrozine, le chlorantraniliprole, le spinosad, le spirodiclofène, le spiromésifène, le spirotétramate, le tebufénozide, le tébufenpyrad, le tébupyrimphos, le téflubenzuron, la téfluthrine, le thiaclopride, le thiaméthoxam, le thiodicarbe, le triazophos et le triflumuron.

**5.** Composition selon l'une quelconque des revendications 1 à 4, comprenant en outre un composé fongicide (d).

**6.** Composition selon la revendication 5, **caractérisée en ce que en ce que** le composé fongicide (d) est choisi parmi le N-[2-(1,3-diméthylbutyl)phényl]-5-fluoro-1,3-diméthyl-1H-pyrazole-4-carboxamide, le métalaxyle, le carbendazime, le pencycuron, la fénamidone, la fluoxastrobine, la trifloxystrobine, le pyriméthanil, l'iprodione, le bitertanol, le fluquinconazole, l'ipconazole, le prochloraz, le prothioconazole, le tébuconazole, le triadiménol, le triticonazole, le carpropamide, le tolylfluanide, le fluopicolide, l'isotianil, le N-{2-[1,1'-bi(cyclopropyl)-2-yl]phényl}-3-(difluorométhyl)-1-méthyl-1H-pyrazole-4-carboxamide, le propamocarb fosétylate, le N-(3',4'-dichloro-5-fluorobiphényl-2-yl)-3-(difluorométhyl)-1-méthyl-1H-pyrazole-4-carboxamide, le N-{2-[3-chloro-5-(trifluorométhyl)pyridin-2-yl]éthyl}-2-(trifluoro-méthyl)benzamide, le fludioxonil, le méfénoxam, la pyraclostrobine, le boscalide, l'azoxystrobine.

**7.** Composition selon l'une quelconque des revendications 1 à 6, **caractérisée en ce qu'**elle comprend en outre un support, un véhicule, une charge et/ou un agent tensioactif acceptable sur le plan agricole.

**8.** Composition selon l'une quelconque des revendications 1 à 7, **caractérisée en ce qu'**elle comprend en outre une complémentation par le champignon *Arbuscular mycorrhizae.*

**9.** Méthode de contrôle préventif ou curatif des insectes, **caractérisée en ce qu'**une quantité efficace et non phytotoxique d'une composition selon l'une quelconque des revendications 1 à 8 est appliquée par l'intermédiaire d'un traitement des semences, d'une application foliaire, d'une application aux tiges, d'une application par goutte à goutte/pulvérisation (application par irrigation) aux semences, à la plante ou aux fruits de la plante ou au sol ou à un substrat inerte, des matériaux de pierre ponce, pyroclastiques/tuf volcanique, des substrats organiques synthétiques, des substrats organiques ou à un substrat liquide dans lequel la plante se développe ou dans lequel on souhaite qu'elle se développe.

**10.** Méthode selon la revendication 9, **caractérisée en ce que** la composition est appliquée en sillon dans le sol.

**11.** Utilisation de la composition selon l'une quelconque des revendications 1 à 8, pour le contrôle préventif ou curatif des insectes.

**12.** Utilisation de la composition selon l'une quelconque des revendications 1 à 8, pour le contrôle préventif des insectes et d'espèces d'adventices parasites.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005077177 A
- WO 9637494 A
- WO 9825923 A


### Non-patent literature cited in the description


- **COOK et al.** *J Am Chem Soc,* 1972, vol. 94, 6198-6199
- **BUTLER.** *Allelopathy: organism, processes and application,* 1995, 158-168
- **HAUCK et al.** *J Plant Physiol,* 1992, vol. 139, 474-478
- **MULLER et al.** *J Plant Growth Regul,* 1992, vol. 11, 77-84
- **SIAME et al.** *J Agr Food Chem,* 1993, vol. 41, 1486-1491
- **YOKOTA et al.** *Phytochemistry,* 1998, vol. 49, 1967-1973
- **AKIYAMA K. ; H. HAYASHI H.** *Annals of Botany,* 2006, vol. 97, 925-931
- Calculation of the synergistic and antagonistic responses of herbicide combinations. *Weeds,* 1967, vol. 15, 20-22
- **BOUWMEESTER et al.** *Current opinion in Plant Biology,* 2003, vol. 6, 358-364
- **MANGNUS et al.** *J. Agric. Food Chem.,* 1992, vol. 40 (6), 697-700
- **FRISCHMUTH et al.** *Tetrahedron,* 1991, vol. 47, 9793-9806
- **MWAKABOKO A.S.** Synthesis and biological evaluation of new strigolactone analogues as germination stimulants for the seeds of the parasitic weeds Striga and Orobanche spp. *Doctoral thesis,* 2003, //webdoc.ubn.kun.nl /mono/m/mwakaboko a/syntanbie.pdf
- **COLBY, S.R.** Calculating Synergistic and antagonistic Responses of Herbicide Combinations. *Weeds,* 1967, vol. 15, 20-22